# EUROPEAN PATENT APPLICATION

(11) **EP 2 079 246 A1**
(43) Date of publication of application: **15.07.2009**
(21) Application number: 06822815.4
(22) Date of filing: 01.11.2006
(51) Int. Cl.: H04Q 7/36

(54) **WIRELESS COMMUNICATION APPARATUS AND WIRELESS COMMUNICATION METHOD**

(71) Applicant: Fujitsu Limited, Kawasaki-shi, Kanagawa 211-8588 (JP)
(72) Inventor: HASEGAWA, Hajime, Kawasaki-shi, Kanagawa 211-8588 (JP); SUGIYAMA, Katsumasa, Kawasaki-shi, Kanagawa 211-8588 (JP)
(74) Representative: Holtby, Christopher Lawrence
(86) International application number: PCT/JP2006/321886
(87) International publication number: WO 2008/053552

(57) **Abstract**

A technique is provided to enable mobile stations to perform realtime communication without degrading reliability of data.

In a radio communication device (1) that wirelessly communicates with mobile stations (2a to 2c) using shared radio resources, a communication decision means (1a) determines whether information indicating a request for realtime communication is contained in a communication request received from a mobile station (2a to 2c) and/or communication setup data received from an upper-level device (3). A radio resource securing means (1b) secures a radio resource continuously or periodically for the requesting mobile station (2a to 2c) if the received communication request and/or communication setup data contains information indicating a request for realtime communication.

## Description

### Technical Field

The present invention relates to a device and method for radio communication, and more particularly to a radio communication device and method for communicating with mobile stations sharing radio resources.

### Background Art

Voice communication is one of the most used services of mobile communication systems. Voice communication systems are now in the process of migration from conventional circuit-switched service to packet-switched service such as Voice over IP (VoIP), as mobile communication systems have recently begun to introduce the Internet Protocol (IP) for their transport interface. In radio link sections of a conventional mobile communication system, the mobile station maintains radio resources (resource channels) once they are assigned. This conventional individual channel allocation method, however, is being replaced by more efficient resource allocation methods such as common channel allocation or shared channel allocation methods.

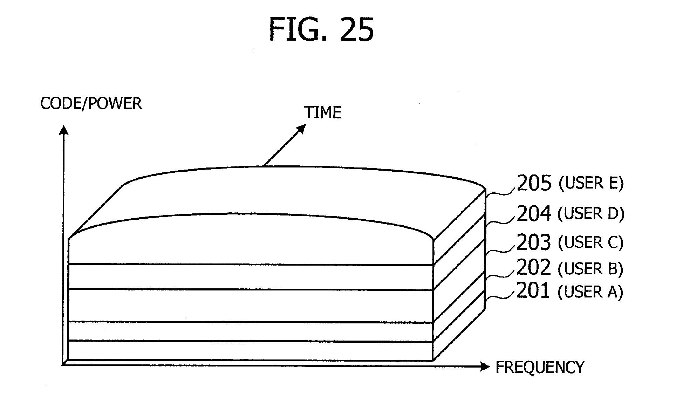

FIG. 25 illustrates an individual channel resource allocation method, particularly in the case of W-CDMA. According to this individual channel resource allocation, radio resources 201 to 205 are allocated to users A to E in a fixed manner, permitting the users A to E to keep their allocated radio resources regardless of the type of bearer services on which their respective data is mapped.

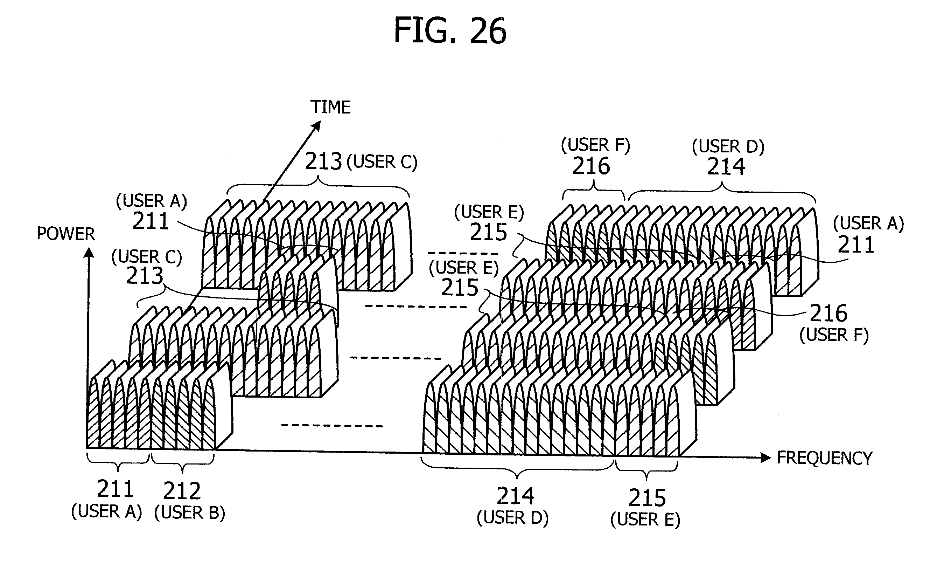

FIG. 26 illustrates a shared channel allocation method. Particularly, FIG. 26 gives an example of channel allocation using Orthogonal Frequency Division Multiple Access (OFDMA), a variation of Orthogonal Frequency Division Multiplexing (OFDM). According to this shared channel allocation method, radio resources 211 to 216 are allocated to users A to E in various ways depending on the condition of radio links and the like, so that the users can share those divided radio resources.

Telephony voice traffic has priority over others, and its pattern is predictable from connection information. As a conventional technique for this type of traffic, there is provided a prioritized reservation scheduling method that makes it possible to guarantee QoS by previously reserving scheduling of switches (see, for example, Patent Literature 1).

Also provided is a packet transfer control device, as well as a scheduling method therefor, that enables high-speed transmission of packets by significantly reducing the amount of computational load in selecting most prioritized packets (see, for example, Patent Literature 2).

Aside from the above, the ongoing discussion of next-generation mobile communication systems assumes the use of shared channel allocation, rather than inheriting conventional individual channel resource allocation, to make effective use of radio resources (i.e., more efficient use of frequencies).
Patent Literature 1: Japanese Lain-open Patent Publication No. 2000-151703
Patent Literature 2: Japanese Laid-open Patent Publication No. 2000-101637

### Disclosure of the Invention

### Problems to be solved by the Invention

In those systems that allow users to share radio resources, however, every requesting user may not be able to receive an allocation of radio resources. Failure in allocating necessary radio resources would degrade the reliability of voice data and other service traffic that are real time in nature.

In view of the foregoing, it is an object of the present invention to provide a radio communication device and method that can perform realtime communication without degrading reliability of data.

### Means for Solving the Problems

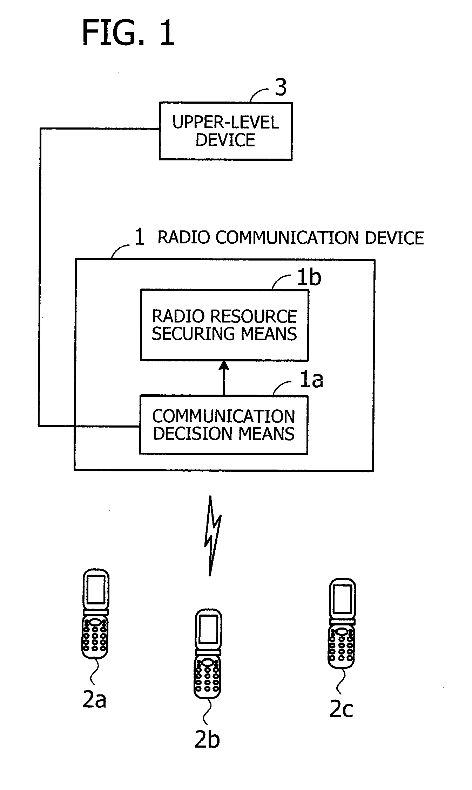

To solve the above problem, the present invention provides a radio communication device 1 illustrated in FIG. 1 which communicates with mobile stations 2a to 2c using shared radio resources. This radio communication device 1 includes a communication decision means 1a that determines whether information indicating a request for realtime communication is contained in a communication request received from mobile stations 2a to 2c and/or communication setup data received from an upper-level device 3. Also included is a radio resource securing means 1b that secures radio resources continuously or periodically for the requesting mobile station 2a to 2c if the received communication request and/or communication setup data contains information indicating a request for realtime communication.

In operation of the above radio communication device 1, radio resources are secured for a requesting mobile station 2a to 2c continuously or periodically if information indicating a request for realtime communication is contained in a communication request received from that mobile station 2a to 2c and/or communication setup data received from the upper-level device 3. Accordingly, the mobile stations 2a to 2c can receive invariable or periodical allocation of radio resources when they perform realtime communication.

### Advantages of the Invention

According to the present invention, the radio communication device is designed to allocate radio resources continuously or periodically to mobile stations that perform realtime communication. This feature permits those mobile stations to perform realtime communication without degrading reliability of data.

The above and other objects, features and advantages of the present invention will become apparent from the following description when taken in conjunction with the accompanying drawings which illustrate preferred embodiments of the present invention by way of example.

### Brief Description of the Drawings

FIG. 1 gives an overview of a radio communication device.
FIG. 2 illustrates a part of a mobile communication system.
FIG. 3 is a flowchart illustrating operation of a base station.
FIG. 4 illustrates how the current allocation of radio resources is checked.
FIG. 5 illustrates securing of free resources.
FIG. 6 illustrates successive resource allocation.
FIG. 7 illustrates reservation-based resource allocation.
FIG. 8 explains periodical allocation of radio resources.
FIG. 9 depicts an example of protocol stacks.
FIG. 10 depicts another example of protocol stack, where the user plane handles voice data.
FIG. 11 illustrates an example of headers given to voice data.
FIG. 12 is a first diagram explaining data segmentation.
FIG. 13 is a second diagram explaining data segmentation.
FIG. 14 illustrates concatenation of AMR data.
FIG. 15 illustrates data segmentation and concatenation.
FIG. 16 illustrates data mapping without segmentation or concatenation.
FIG. 17 is a sequence diagram illustrating interactions between mobile station, base station, and RNC.
FIG. 18 is another sequence diagram illustrating interactions between mobile station, base station, and RNC.
FIG. 19 is a functional block diagram of a base station.
FIG. 20 is a flowchart illustrating how the base station handles an outgoing call.
FIG. 21 is a flowchart illustrating how the base station handles an incoming call.
FIG. 22 is a flowchart illustrating how the base station handles a second call setup.
FIG. 23 is a flowchart illustrating how the base station obtains radio resources for downlink and uplink.
FIG. 24 illustrates notification of radio resources.
FIG. 25 illustrates an individual channel resource allocation method.
FIG. 26 illustrates a shared channel allocation method.

### Best Mode for Carrying Out the Invention

Embodiments of the present invention will be described below with reference to the accompanying drawings.
FIG. 1 gives an overview of a radio communication device. This radio communication device 1 includes a communication decision means 1a and a radio resource securing means 1b. The radio communication device 1 communicates with mobile stations 2a to 2c in accordance with a shared channel allocation method, for example. The radio communication device 1 is linked to an upper-level device 3, which controls its subordinate radio communication device 1 and mobile stations 2a to 2c.

The communication decision means 1a is responsive to a communication request sent from mobile stations 2a to 2c, as well as to communication setup data sent from the upper-level device 3. The communication decision means 1a determines whether the received communication request and communication setup data contain information indicating a request for realtime communication (e.g., voice communication). The communication setup data is transmitted from the upper-level device 3 to the radio communication device 1 when the upper-level device 3 establishes a user data channel between mobile stations.

The radio resource securing means 1b secures radio resources for the mobile stations 2a to 2c continuously or periodically when the received communication request and communication configuration data contain information indicating a request for realtime communication.

For example, when a communication request received from a mobile station 2a contains information indicating a request for realtime communication, the radio resource securing means 1b secures radio resources for that mobile station 2a continuously or periodically. Or when information indicating a request for realtime communication is found in the communication setup data that the upper-level device 3 has sent for the purpose of establishing a user data channel for mobile stations, the radio resource securing means 1b secures radio resources for the relevant mobile station 2a to 2c continuously or periodically.

As described above, the proposed radio communication device is designed to allocate radio resources continuously or periodically to mobile stations that perform realtime communication. This feature permits those mobile stations to perform realtime communication without degrading reliability of data.

An embodiment of the present invention will now be described below in detail, with reference to the drawings.

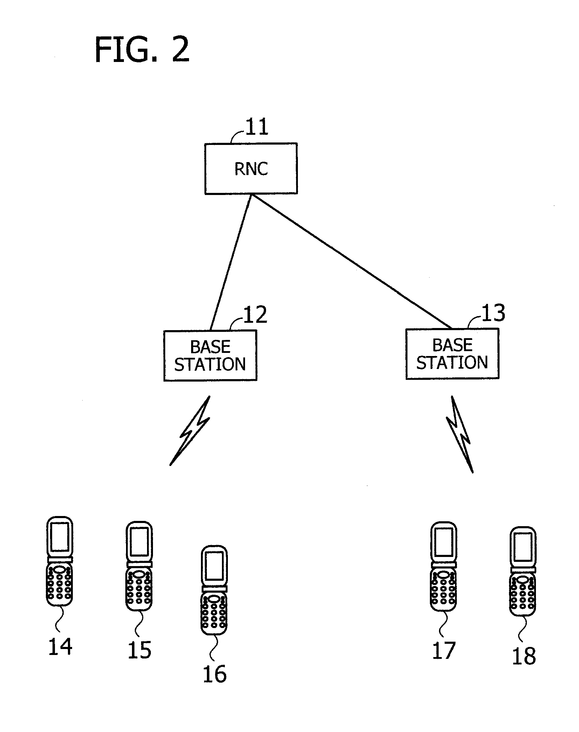

FIG. 2 illustrates a part of a mobile communication system. The illustrated mobile communication system includes a radio network controller (RNC) 11, base stations 12 and 13, and mobile stations 14 to 18. While it is not illustrated, the system may include two or more RNCs, and those RNCs may be coupled to an upper-level station.

The RNC 11 is connected with the base stations 12 and 13 through wired links. Besides controlling its subordinate base stations 12 and 13, the RNC 11 controls mobile stations 14 to 18, which may be, for example, cellular phones. The base station 12 controls mobile stations 14 to 16 in its own coverage area. The base station 13 controls mobile stations 17 and 18 in its own coverage area.

Those mobile stations 14 to 18 use, for example, OFDM to communicate with the base stations 12 and 13 via radio waves. For use in a communication session with the base stations 12 and 13, the mobile stations 14 to 18 receive an allocation of radio resources (e.g., specific frequency and time) from the base stations 12 and 13 according to a common channel method or a shared channel allocation method.

The common channel method and shared channel allocation method do not guarantee that a requesting user can always receive an allocation of radio resources. Rather, the base station may fail to provide necessary radio resources. A temporary lack of radio resources would do no harm to the service of less-realtime packet communication, as in the case of Internet access or file downloading using the File Transfer Protocol (FTP) while it may produce some delay in downloading. However, the reliability of voice data and other realtime service traffic may be degraded by such a lack of radio resources.

For the above reason, the proposed base stations 12 and 13 are designed to secure radio resources and allocate those resources to a mobile station 14 to 18 when that station requests realtime radio communication. The securing of radio resources is performed continuously or periodically. In the latter case, the base stations 12 and 13 secure radio resources at appropriate intervals, not to degrade the reliability of data.

The secured radio resource may, however, not be sufficient for transmission of a large chunk of data (packet) at a time. If this is the case, the base stations 12 and 13 divide the data into smaller segments such that the data can be transmitted by mapping each segment to the secured radio resource. When, on the other hand, the data is smaller than the secured radio resource, the base stations 12 and 13 concatenate it with other such data and map them to the radio resource, thus improving the resource usage.

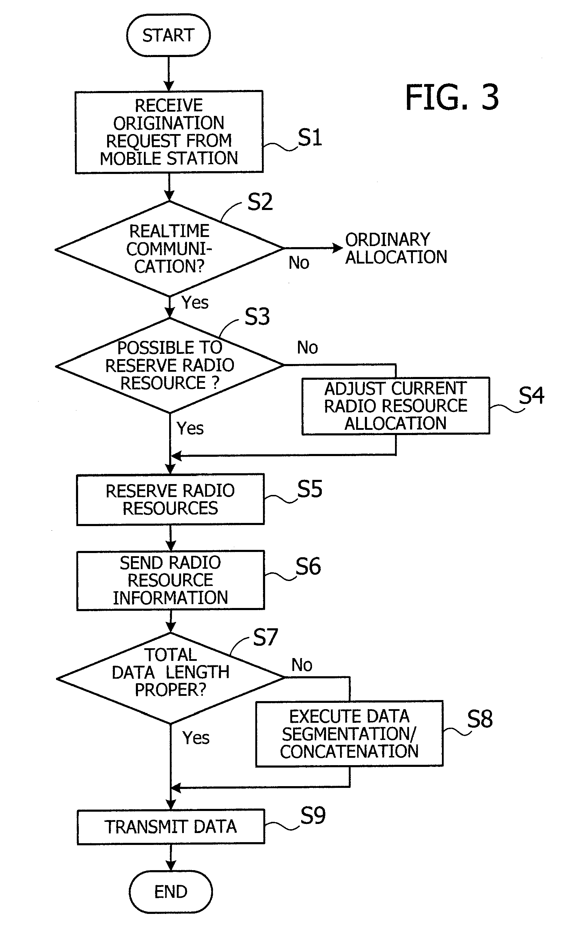

FIG. 3 is a flowchart illustrating operation of a base station. Specifically, the base station 12 executes the steps described below. The other base station 13 also executes a process similar to those steps, whose description will not be repeated here.

(Step S1) The base station 12 receives from a mobile station 14 a request for setting up a circuit connection. This request is referred to herein as an origination request.
(Step S2) The base station 12 determines whether the origination request from the mobile station 14 is requesting realtime communication or non-realtime communication. Specifically, the origination request may include an identifier indicating what type of communication is requested, as in a Wideband Code Division Multiple Access (W-CDMA) system, for example. Based on such an identifier or other similar information, the base station 12 determines whether the origination request is requesting realtime communication or non-realtime communication. If the request is for realtime communication, then the base station 12 advances to step S3. If the request is for non-realtime communication, the base station 12 obtains radio resources and allocates them to the requesting user (mobile station 14) based on a conventional, ordinary allocation algorithm.

(Step S3) The base station 12 determines whether it is possible to secure radio resources periodically for the user. Note that the term "periodically" is used herein in the sense including "continuously." If it is possible to secure radio resources, the base station 12 advances to step S5. It not, the base station 12 proceeds to step S4.

(Step S4) Since the current allocation does not allow it to secure radio resources, the base station 12 then adjusts radio resources of mobile stations engaged in non-realtime communication, so that the mobile station 14 requesting realtime communication can secure a certain amount of radio resources. More specifically, the base station 12 finds a mobile station currently engaged in non-realtime communication and allocates a part of its radio resources to the requesting mobile station in preference to other mobile stations.

(Step S5) The base station 12 obtains radio resources and allocates them to the mobile station 14. The size, interval, and frequency of radio resources may be fixed in this allocation. Or alternatively, they may be varied within a range defined by given parameters.

(Step S6) The base station 12 informs the mobile station 14 of the obtained radio resources.
(Step S7) The base station 12 checks the total length of the data (including its header) to be mapped to the radio resources. If the total data length is within a predetermined range (e.g., A < total data length < B), then the base station 12 proceeds to step S9. If the total data length is out of the predetermined range, the base station 12 advances to step S8.

(Step S8) If the total data length is above the predetermined range, the base station 12 divides the data into segments. If the total data length is below the predetermined range, the base station 12 concatenates data before it is transmitted. The data objects subjected to this concatenation process may not be limited to that of a single user, but can include DTX data (silence information, small in size) of multiple users.

(Step S9) The base station 12 transmits data wirelessly. Transmit data may, however, stop in the buffer due to degradation of radio link quality even if the base station 12 could allocate radio resources in succession. If this happens, the base station 12 finds and discards such transmit data in the buffer, based on a predetermined overstay threshold.

Further details of the above steps will now be described below. Referring first to steps S3 to S5 of FIG. 3, the following will explain how the base station 12 determines whether it can secure radio resources, adjusts current radio resource allocation, and secures radio resources. Note that the following explanation assumes an OFDM system.

(A) Upon receipt of an origination request for a realtime communication session from a mobile station, the base station 12 checks the current allocation of radio resources of its own. (B) If free radio resources are found, the base station 12 allocates them to the requesting mobile station. If no free radio resources are available, the base station 12 then manages to secure some of the existing resources for the purpose of allocation to the requesting mobile station. This is achieved by, for example, changing the current allocations of lower-priority mobile stations, such as those engaged in non-realtime communication sessions. More specifically, the operation (A) of checking free resources is executed as follows.

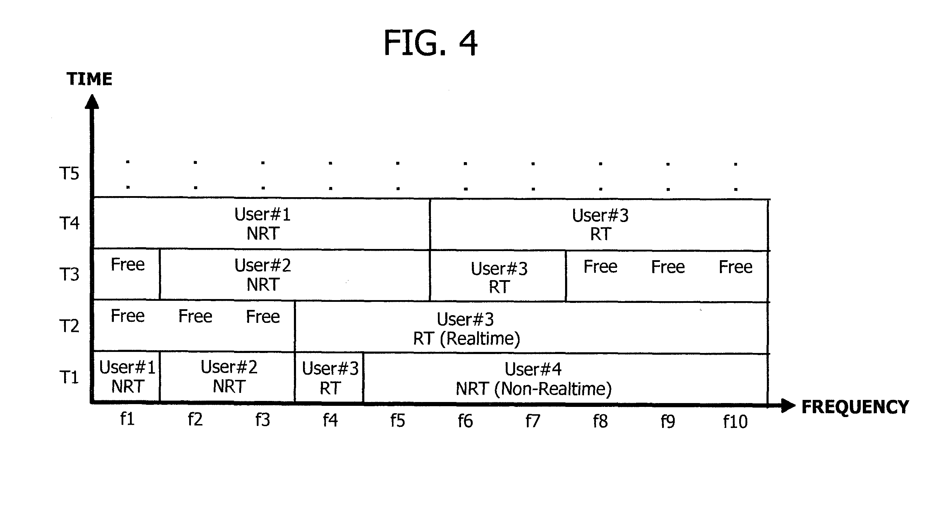

FIG. 4 illustrates how the current allocation of radio resources is checked. Illustrated is a radio resource management table that the base station 12 stores in a memory device or the like. The symbols "User #1" to "User #4" represent mobile stations. The text "Free" is placed at several resource blocks to indicate that those radio resources are not assigned to any users. "NRT" indicates that the corresponding user is engaged in a non-realtime communication session. "RT" indicates that the corresponding user is engaged in a realtime communication session.

Referring to the example table of FIG. 4, User #1 performing a non-realtime communication session is assigned to the resource block of time period T1 and frequency band f1. Likewise, User #3 performing a realtime communication session is assigned to resource blocks of time period T2 and frequency bands f4 to f10. FIG. 4 also shows that the resource block of time period T3 and frequency band f1 is currently free.

For example, when an origination request is received at time period T2 from a user, the base station 12 finds free resource blocks at frequency bands f1 to f3, as well as occupied resource blocks at frequency bands f4 to f10. Likewise, when an origination request is received at time period T4 from a user, the base station 12 finds all resource blocks occupied, throughout the frequency bands f1 to f10.

As can be seen from the above example, the base station 12 consults its radio resource management table to check the current allocation of radio resources upon receipt of an origination request from a mobile station.
Then the above-noted operation (B) of securing free resources is performed as follows.

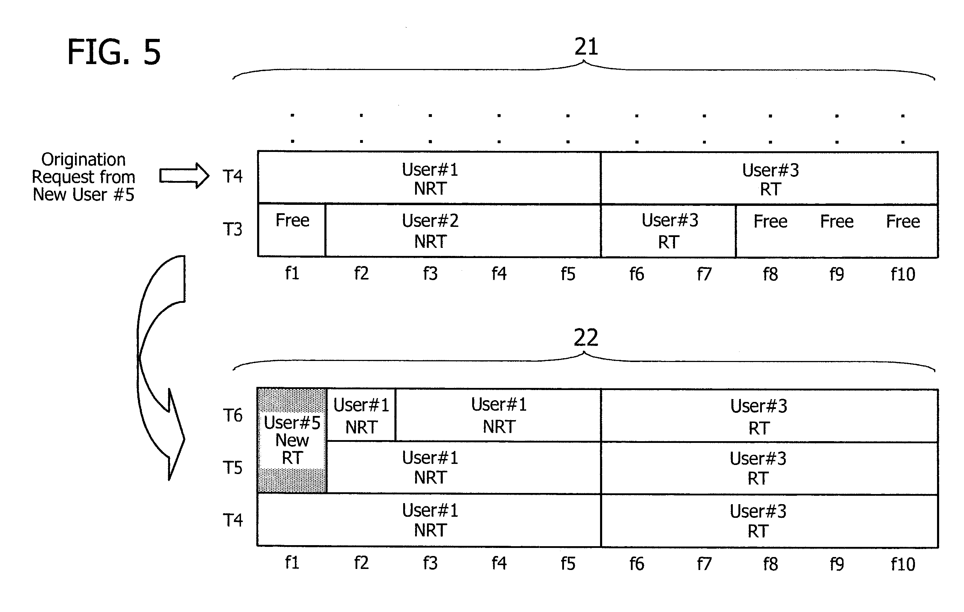

FIG. 5 illustrates securing of free resources. Specifically, FIG. 5 illustrates a radio resource management table 21 at time period T4 when an origination request is received from a new user, User #5. Another radio resource management table 22 in the same drawing represents a subsequent state of the radio resource management table 21.

Upon receipt of an origination request from User #5 at time period T4, the base station 12 checks the current allocation of resource blocks in an attempt to secure some of them. The illustrated radio resource management table 21 gives no free resource blocks. At present, User #1 is requesting resource blocks of frequency bands f1 to f5 for non-realtime communication, and User #3 is requesting resource blocks of f6 to f10 for realtime communication.

In the present case, the base station 12 allocates a frequency band f1 in time periods T5 and T6 to the requesting User #5 in preference to User #1, as illustrated in another radio resource management table 22.

In other words, the base station 12 reallocates a resource block of non-realtime User #1 to new requesting User #5 because User #5 is requesting realtime communication, which has a higher priority over less delay-sensitive, non-realtime communication (e.g., Internet browsing, electronic mail).

The following will describe how to allocate obtained radio resources.

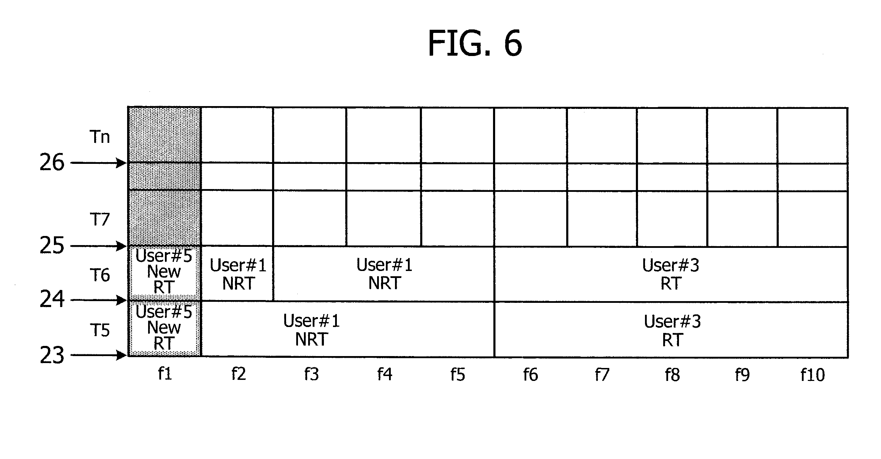

FIG. 6 illustrates successive resource allocation. According to this successive resource allocation, the base station 12 makes decisions about resource allocation at every allocation interval. Specifically, when a user is requesting realtime communication, the base station 12 checks the presence of free resource blocks at resource allocation decision intervals and allocates found blocks to the user in preference to others.

For example, the base station 12 checks the presence of free resource blocks when making a decision of resource allocation in each time period T5, T6, T7,... Tn, as indicated by the arrows 23 to 26 in FIG. 6. Since User #5 is requesting a realtime communication session in the example of FIG. 6, the base station 12 allocates a resource block of frequency band f1 to User #5.

Despite the example of FIG. 6, the User #5 may not actually be fixed to the resource block of frequency band f1 since free resource blocks are checked each time a new resource allocation decision interval comes. If, for example, some other frequency band is vacant at the time of decision, the base station 12 may assign User #5 to the resource block of that frequency band.

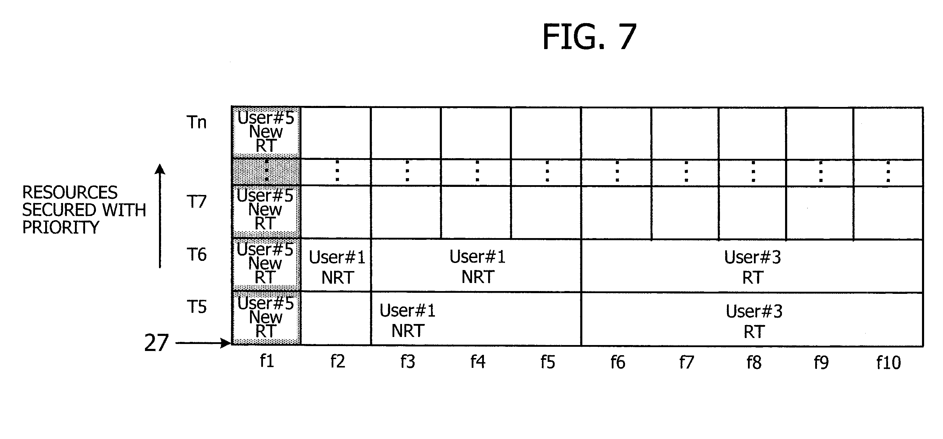

FIG. 7 illustrates reservation-based resource allocation. According to this allocation method, the base station 12 secures resource blocks at the time when an origination request is received from a user, and it maintains the secured blocks for prioritized allocation to that user until the communication session is terminated (e.g., until the call is disconnected or the resources are deallocated as a result of handover of the mobile station), or until the time specified by a "grant" (described later) is reached.

While not indicated explicitly in FIG. 7, it is assumed here that the request from User #5 for realtime communication was received during time period T4, preceding T5. The base station 12 thus allocated a resource block of time period T5 and frequency band f1 to User #5 at the time indicated by the arrow 27. The base station 12 continues to allocate that resource block of f1 to User #5 in preference to others from then on until the communication session is disconnected.

The following will now describe the intervals of radio resource allocation. It has been assumed in the above description that the user requesting realtime communication can receive a successive allocation of radio resources. It is also possible, however, for the base station 12 to allocate radio resources to users in a periodical manner for more efficient use of such resources.

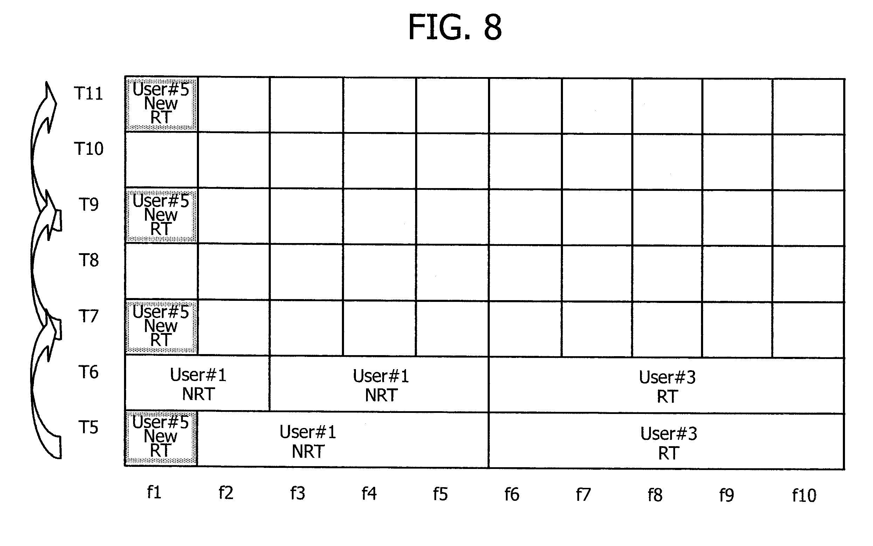

FIG. 8 explains periodical allocation of radio resources. As can be seen from FIG. 8, radio resources are allocated periodically to User #5 that has issued an origination request for realtime communication. More specifically, User #5 receives an allocation of radio resources at every other time period. This interval of periodical resource allocation may be specified by a parameter. This parameter may specify, for example, that a resource block be allocated to User #5 every three time periods or every four time periods, depending on the characteristics of realtime communication that is requested.

The following will now explain the data segmentation operation mentioned earlier in step S8 of FIG. 3. The explanation begins with protocol stacks used to interconnect the RNC 11, base stations 12 and 13, and mobile stations 14 to 18.

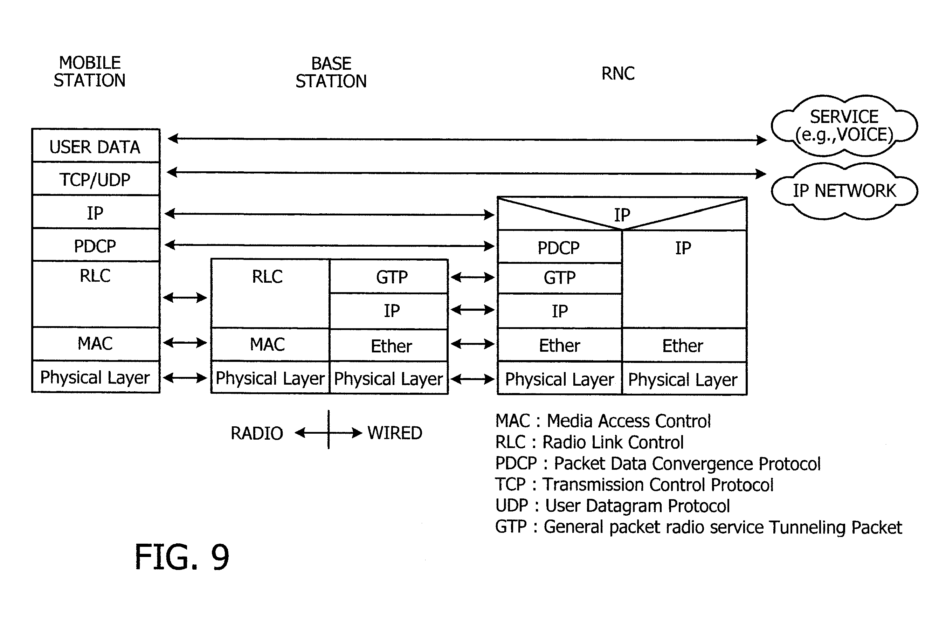

FIG. 9 depicts an example of protocol stacks. The RNC 11, base stations 12 and 13, and mobile stations 14 to 18 communicate with each other according to the protocols illustrated in FIG. 9.

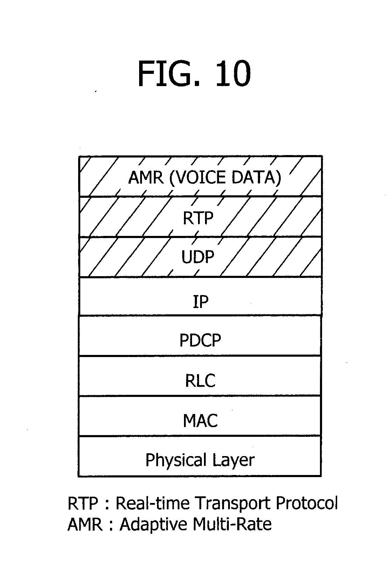

FIG. 10 depicts another example of protocol stack, where the user plane handles voice data. As can be seen, Adaptive Multi-Rate (AMR) is placed as the topmost protocol, and data is exchanged between the mobile stations 14 to 18 and the RNC 11 under the control of IP and lower layers.

Voice data is transmitted by using AMR resource blocks at 20-ms intervals, for example. The receiving radio layers perform their respective layer-specific tasks and transmit the outcomes in accordance with 2X subframes of 1 ms.

AMR data communication at 12.2 kbps (which is the maximum bitrate of AMR codec, excluding W-AMR) usually requires a 32-byte data area per 20 ms. In other words, AMR data communication requires radio resources that make it possible to transmit voice data of at least 32 bytes. However, it may not always be possible to provide sufficient radio resources, depending on what header information is added in VoIP(AMR) communication.

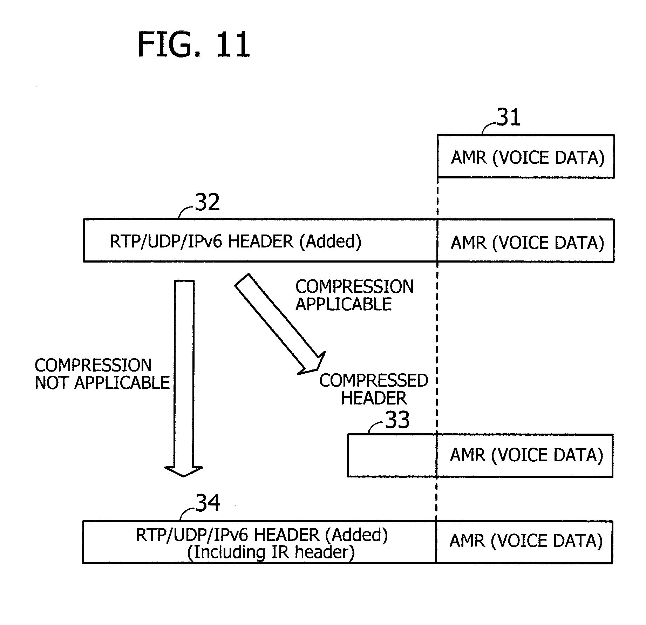

FIG. 11 illustrates an example of headers given to voice data. As can be seen, AMR data (voice data) 31 is preceded by an RTP/UDP/IPv6 header 32.
This headers 32 can be compressed by using PDCP header compression, which reduces the length of a header 32 to one to three bytes. With this compression technique, the total data length of AMR data 31 and its header 33 is in the range of 33 to 35 bytes.

RTP header, part of the header 32, may be an Initialization and Refresh (IR) header. If this is the case, the header 32 should be placed as is, as illustrated as a header 34 in FIG. 11, since the above-noted PDCP header compression cannot be applied to IR header.

A shortage of radio resources may thus happen, depending on what kind of RTP header is contained in the header 32.
For the above-described reason, the base station 12 divides the data into segments and mapping those data segments to radio resources, so that the data can be transmitted regardless of its total length.

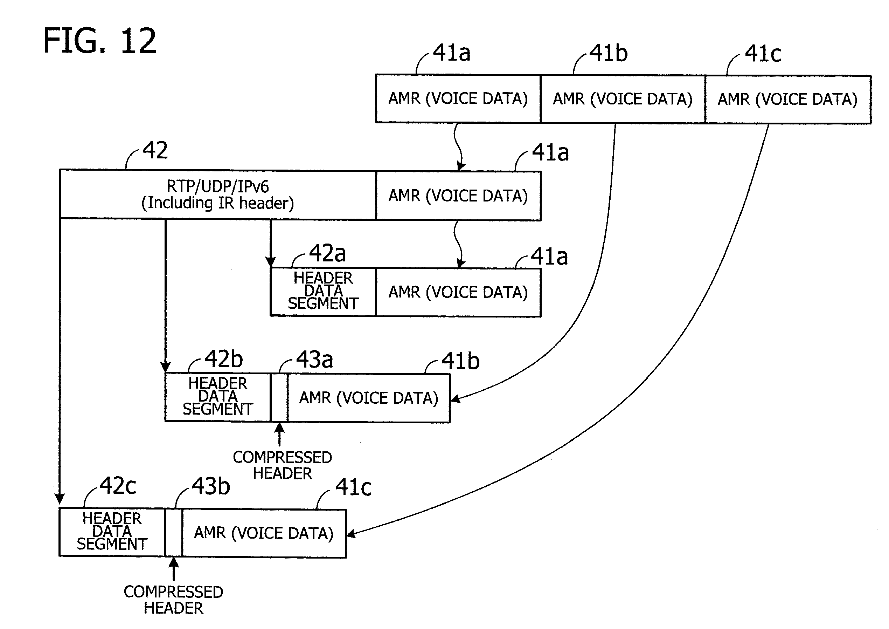

FIG. 12 is a first diagram explaining data segmentation. Specifically, FIG. 12 illustrates AMR data 41a to 41c to be transmitted. It is assumed here that AMR data 41a is added an IR header in its RTP header field, which prevents the use of PDCP header compression, whereas AMR data 41b and 41c can be subjected to PDCP header compression. Compressed headers 43a and 43b are therefore attached to AMR data 41b and 41c, respectively, as depicted in FIG. 12.

AMR data 41a, on the other hand, is preceded by a non-compressed header 42 since header compression cannot be applied. Since RTP header consumes a space of 60 bytes in this non-compressed header 42, the AMR data 41a and header 42 will make a very long frame. More specifically, the total data size will amount to 92 bytes or more, including 32 bytes of AMR data, 60 bytes of RTP header, and some additional bytes of UDP/IPv6 headers.

The base station 12 therefore divides the original non-compressed header 42 of AMR data 41a into segments and places them in front of compressed AMR headers 43a and 43b.
Referring to FIG. 12, the base station 12 divides the header 42 of AMR data 41a into three segments, which are referred to as header data segments 42a to 42c. Then the base station 12 adds such a header data segment 42a to AMR data 41a. Likewise, base station 12 adds another header data segment 42b to AMR data 41b, and yet another header data segment 42c to AMR data 41c.

After applying PDCP header compression, the base station 12 executes the above-described header segmentation if the resulting total length of AMR data and RTP/UDP/IPv6 header exceeds a predetermined size. For example, the above header segmentation takes place after PDCP header compression if the resulting total length is more than 35 bytes. That is, the base station 12 divides the header of data that has not been compressed by PDCP.

As can be seen from the above, the base station 12 is configured to divide a large header and append the results to other AMR data with compressed headers. This feature reduces the deviation of transmit data sizes, as well as avoiding the situation where the data cannot be mapped on allocated radio resources.

The proposed feature also eliminates the need for preparing a large resource block to accommodate a large header, thus enabling more efficient use of radio resources.

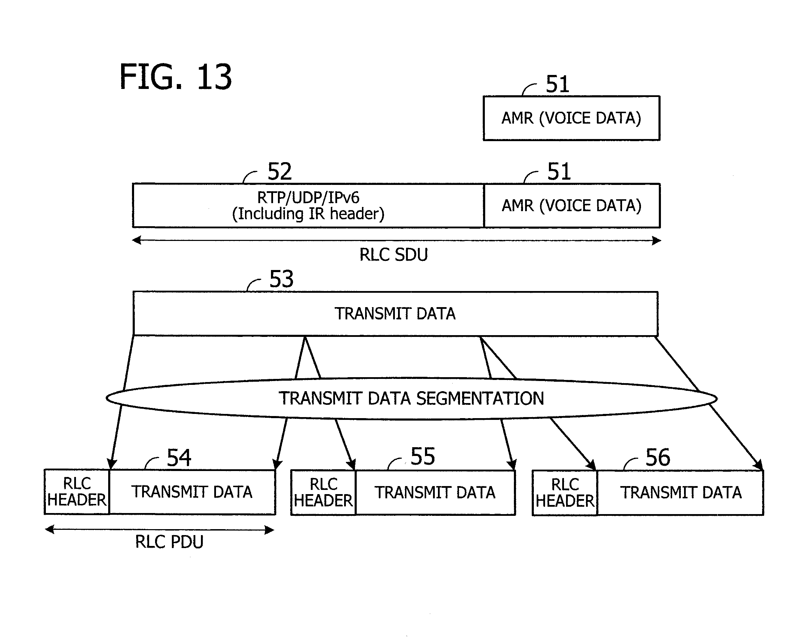

FIG. 13 is a second diagram explaining data segmentation. Specifically, FIG. 13 illustrates AMR data 51, which is to be transmitted with an IR header in its RTP header field. Since this IR header prevents the use of PDCP header compression, a non-compressed header 52 is attached to the AMR data 51 as illustrated in FIG. 13.

The base station 12 regards the AMR data 51 and its header 52 as transmit data 53 (RLC SDU) and thus divides that transmit data 53. More specifically, the base station 12 divides the transmit data 53 into three segments and adds a header to each segment, thus producing three pieces of transmit data 54 to 56 (RLC PDU). By mapping each piece of transmit data 54 to 56 on radio resources, the base station 12 transmits them wirelessly.

In this way the base station 12 divides AMR data and its header before transmitting them if that header is not compressed. This feature reduces the deviation of transmit data lengths, thus avoiding the situation where the data cannot be mapped on allocated radio resources.

The following will now explain the data concatenation operation mentioned earlier in step S8 of FIG. 3.
Data concatenation is a process of combining two or more pieces of data into a single series of data. It is possible, for example, to combine three pieces of data with a size of 10 bytes. The number of data objects to be concatenated may vary, depending on the size of available resources. Note that the base station 12 may be configured to concatenate data of different users, as well as data of a single user.

The AMR scheme provides Silence Descriptor (SID) to indicate silence which may be present in the actual conversation between speakers. SID data is transmitted in place of voice data when there are no voice signals. The size of SID data is about 10 bytes, which is smaller than 32-byte AMR frames. The base station 12 may concatenate small transmit data like SID. For example, the base station 12 may concatenate a plurality of SIDs to form an RLC PDU, which is mapped on a radio resource for transmission. The efficiency of data transmission is improved by combining such small pieces of data together.

As described above, the data concatenation operation is applied to RLC SDU (AMR data and SID data).

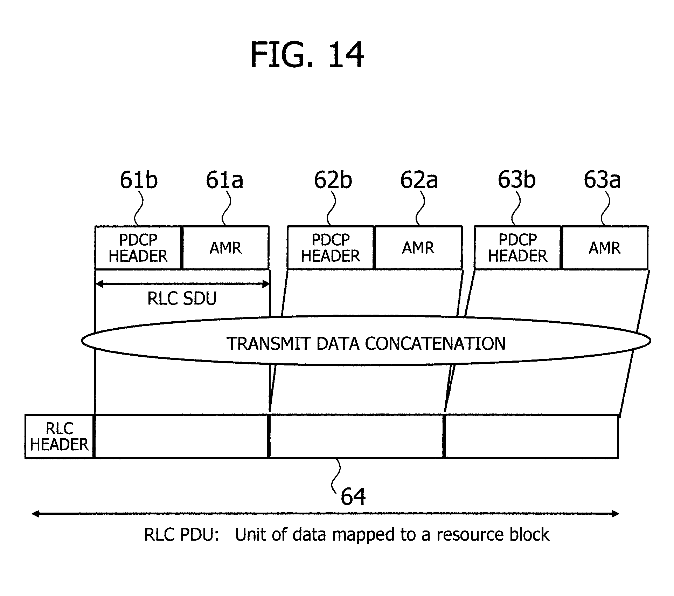

FIG. 14 illustrates concatenation of AMR data. Specifically, FIG. 14 illustrates three RLC Service Data Units (RLC SDUs) formed from AMR data 61a to 63a and their respective compressed headers (PDCP headers) 61b to 63b. For example, the base station 12 concatenates these three RLC SDUs to produce an RLC Protocol Data Unit (RLC PDU) 64. RLC PDU is a unit of data to be mapped to a resource block.

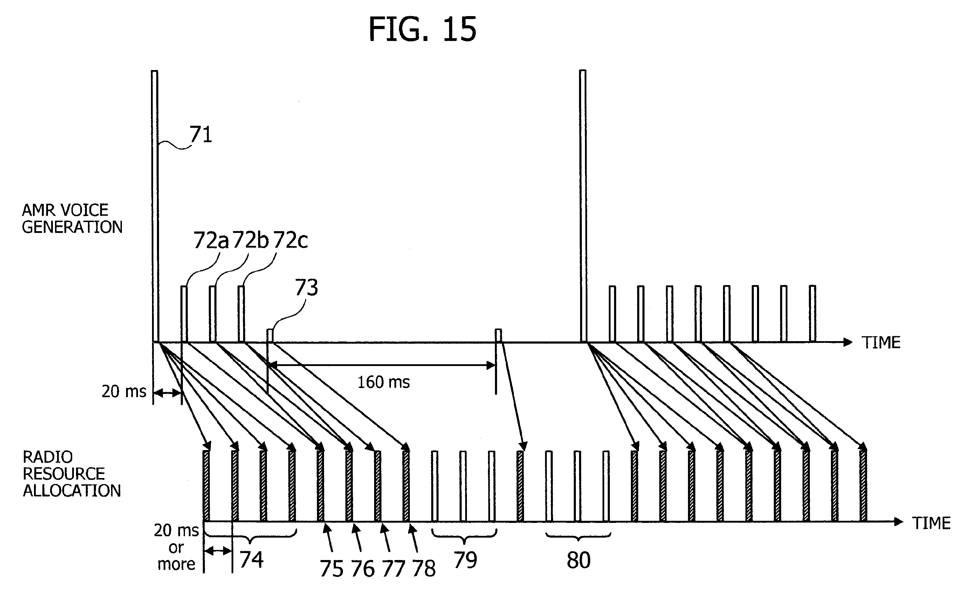

The following will now describe a data segmentation and concatenation process illustrated in FIG. 15. Specifically, FIG. 15 depicts AMR voice generation, together with radio resource allocation. The bars in the graph of AMR voice generation represent AMR data produced, their height indicating the amount of data. AMR data 71 contains an IR header with a length of about 100 bytes. AMR data 72a to 72c have a compressed header and are about 35 bytes in length. SID data 73 is about 10 bytes in length.

The bars in the graph of radio resource allocation represent radio resources, their height indicating the amount of resource. It is assumed that each radio resource provides a capacity greater than a single piece of AMR data 72a to 72c with a compressed header. More specifically, each radio resource can convey about 35 bytes or more.

AMR data 71 is too large to be delivered with a single radio resource. Accordingly, the base station 12 divides this AMR data 71 before mapping it to radio resources 74.
As noted above, each radio resource provides a capacity greater than a single piece of AMR data 72a to 72c with a compressed header. The base station 12 subjects those AMR data 72a to 72c to a segmentation and concatenation process before mapping them to radio resources 75 to 77. The base station 12 then maps SID data 73 to a single radio resource 78. This SID data can naturally be concatenated with other data in the way mentioned earlier.

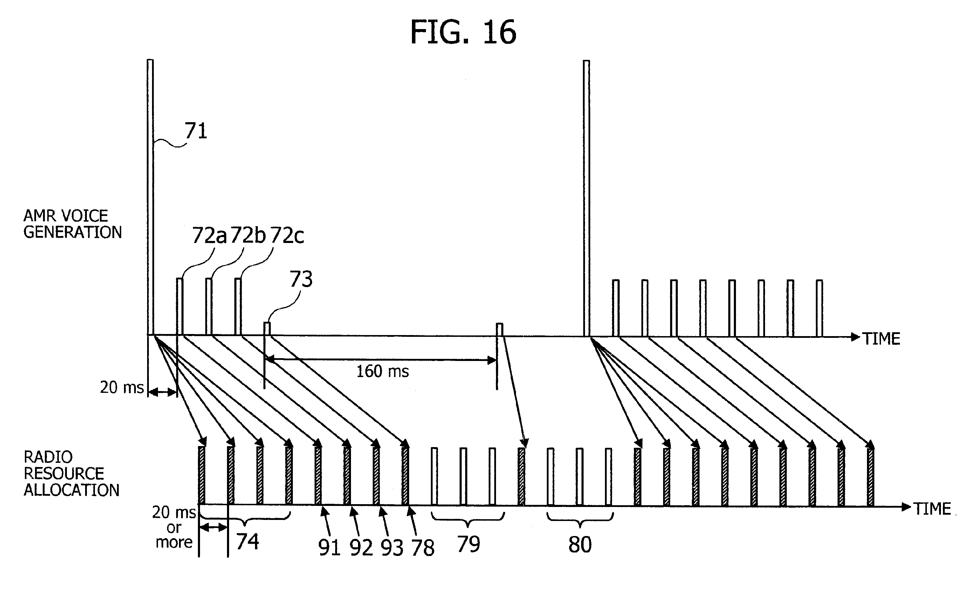

The base station 12 may deallocate radio resources when it has no data to map. FIG. 15 illustrates radio resources 79 and 80 as an example of such resources.
In contrast to FIG. 15, FIG. 16 illustrates data mapping without segmentation or concatenation. Because of their similarity, like reference numerals refer to like objects, and their description will not be repeated here.

It is assumed in FIG. 16 that radio resources have the same size as AMR data 72a to 72c with a compressed header. Accordingly, the base station 12 maps AMR data 72a to 72c to radio resources 91 to 93 without segmentation or concatenation.

The above-described data segmentation operation and data concatenation operation correspond to the RLC SDU concatenation function and RLC PDU segmentation function of 3G systems.

The following will now explain the data transmission operation mentioned earlier in step S9 of FIG. 3. The services using shared channel allocation, such as High Speed Packet Access (HSPA)/Long Term Evolution (LTE) systems, cannot transmit data immediately if the receive channel is in a poor condition when mapping data to radio resources. If this is the case, the transmit data is held in the buffer until a trigger signal is asserted to enable the transmission.

Realtime data in the buffer, however, would become obsolete in a certain time. It is meaningless to store the past voice data.

The base station 12 therefore has a discard function and timers therefor, so as to discard obsolete data that has lost its real time nature.
More specifically, the base station 12 assigns a fixed timer to each piece of transmit data as it is produced for transmission to mobile stations. This timer specifies, for example, a discard time when the data should be discarded. The base station 12 removes data from the buffer, based on the timer attached to that data (e.g., when its discard time is reached), thus discarding data on an oldest-first basis.

Alternatively, the base station 12 may set a threshold for its first-in first-out (FIFO) buffer. That is, old data is removed from the buffer when the amount of stored data exceeds the threshold.
The base station 12 uses its buffer more efficiently by discarding data in the way described above. Since the discard function works on an oldest-first basis, the latest data can be maintained in the buffer, which contributes to improved reproducibility of realtime communication.

The following will now describe in what sequence the mobile station, base station, and RNC communicate with each other.

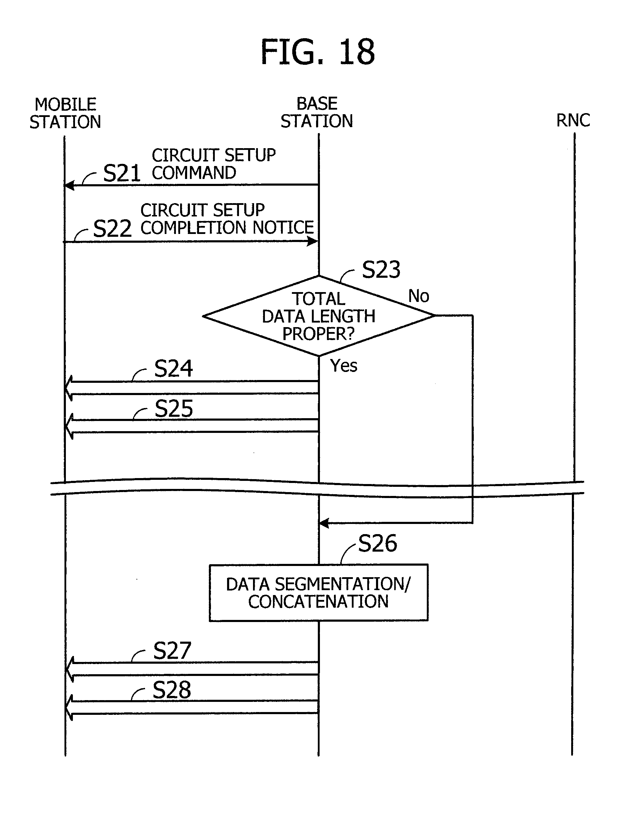

FIG. 18 is a sequence diagram illustrating interactions between mobile station, base station, and RNC. Specifically, the following steps are executed by a mobile station, base station, and RNC:

(Step S11) The mobile station transmits an origination request to the base station.
(Step S12) In response to the origination request, the base station transmits scheduling data back to the mobile station for subsequent exchange of control information.

(Step S13) The mobile station requests the base station to set up a circuit connection. This circuit setup request includes information about what type of communication the mobile station intends to originate.
(Step S14) The base station extracts the communication type information specified in the circuit setup request from the mobile station.

(Step S15) The base station determines whether the extracted communication type information indicates realtime communication. If so, the base station advances to step S16. If it is for non-realtime communication, the base station allocates radio resources in the ordinary way.

(Step S16) The base station sends a circuit setup request to the RNC for subsequent exchange of control information.
(Step S17) The RNC acknowledges the circuit setup request from the base station.

(Step S18) The base station determines whether it is possible to secure radio resources. If it is found possible to secure radio resources, the base station advances to step S20. If not, the base station proceeds to step S19.

(Step S19) The base station adjusts the current allocation of radio resources. For example, the base station finds a mobile station currently engaged in non-realtime communication and allocates some of its radio resources to the mobile station requesting realtime communication in preference to the former mobile station.

(Step S20) The base station secures radio resources for the mobile station requesting realtime communication.
(Step S21) The base station sends a circuit setup command to the mobile station. This circuit setup command includes, for example, information about the radio resources secured at step S20.

(Step S22) The mobile station returns a response to the base station to indicate completion of circuit setup.
(Step S23) The base station determines whether the total data length (e.g., total length of AMR data and RTP/UDP/IPv6 header) is within a predetermined range. More specifically, the base station determines whether the total data length is within the range from 15 bytes to 35 bytes. If so, the base station executes steps S24 and S25. If not, the base station proceeds to step S26.

(Steps S24 and S25) The base station transmits voice data.
(Step S26) The base station subjects the data to a segmentation and concatenation process. More specifically, data segmentation is applied when the total data length is greater than 35 bytes. Data concatenation is applied when the total data length is smaller than 15 bytes.

(Steps S27 and S28) The base station transmits voice data that has undergone a data segmentation operation or data concatenation operation. In the former case, the segments of voice data are transmitted at fixed intervals of 20 ms, for example.

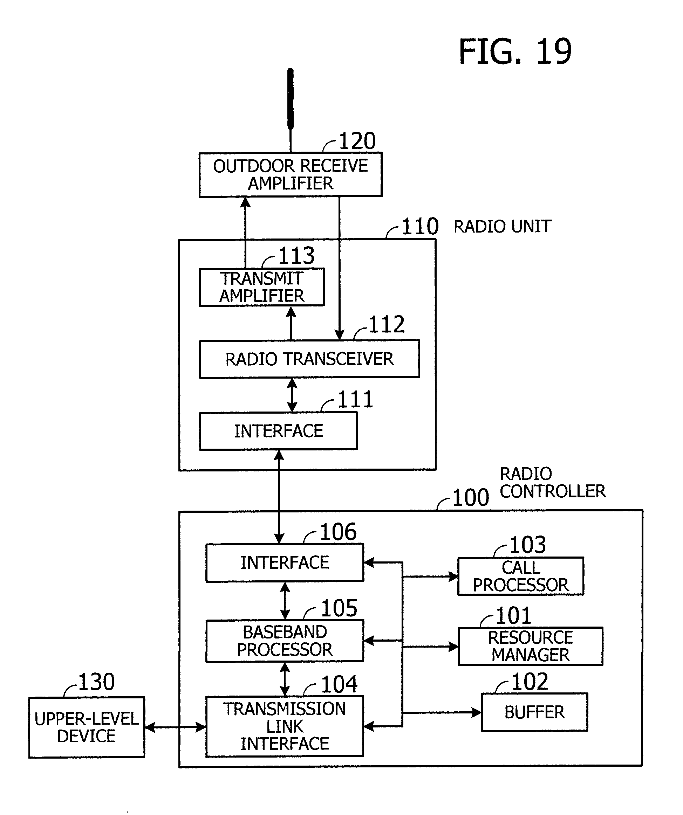

FIG. 19 is a functional block diagram of a base station. The illustrated base station is formed from a radio controller 100, a radio unit 110, and an outdoor receive amplifier 120.

The radio controller 100 includes a resource manager 101, a buffer 102, a call processor 103 to handle calls, a transmission link interface 104 to exchange data with an upper-level device 130 (e.g., RNC), a baseband processor 105 for baseband processing of radio signals, and an interface 106 to exchange data with the radio unit 110.

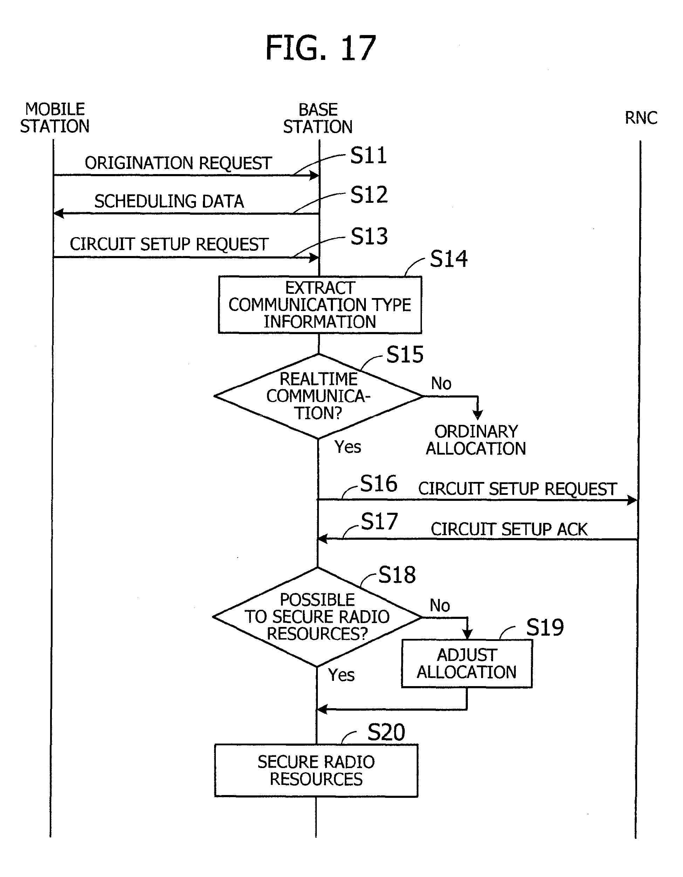

The resource manager 101 executes the processing tasks explained earlier in FIGS. 3, 17, and 18. The buffer 102 stores data temporarily before the data is transmitted to mobile stations. Data stored in this buffer 102 may be discarded on an oldest-first basis upon expiration of a fixed time.

The radio unit 110 includes an interface 111, a radio transceiver 112, and a transmit amplifier 113. The interface 111 exchanges data with the radio controller 100. The radio transceiver 112 provides the transmit amplifier 113 with outgoing data to be transmitted to mobile stations via radio waves, as well as receiving incoming data from the outdoor receive amplifier 120. The transmit amplifier 113 amplifies data signals for radio transmission to mobile stations.

The outdoor receive amplifier 120 transmits the output data signals of the radio unit 110 to mobile stations. The outdoor receive amplifier 120 also amplifies data signals received from mobile stations and supplies them to the radio unit 110.
As can be seen from the above discussion, the base station secures radio resources for mobile stations such that their data communication can be accomplished without degrading its realtime nature (comfort of voice communication and the like). Also the base station 12 performs data segmentation and concatenation to achieve more efficient use of radio resources. Obsolete data is discarded to improve the usage of the buffer and radio resources. Those features can be applied to next-generation mobile communication networks and other systems called "all-IP Network," which are designed to eliminate circuit-switched service. The proposed features make it possible to offer realtime data communication services including voice communication, without sacrificing their convenience.

While the above-described processing functions are provided in base stations, the present invention is not limited to that implementation. It is noted that the same functions may also be implemented in RNC. Further, the proposed processing functions can also be applied to W-CDMA systems and wireless LAN systems.

The above description has assumed that the base station identifies a realtime communication session based on an identifier contained in an origination request from mobile stations. Alternatively, however, the base station may rely on circuit setup information provided from an access gateway (aGW), core network (CN) device, or other network node serving as an upper-level device. This alternative implementation will be described below with reference to several flowcharts.

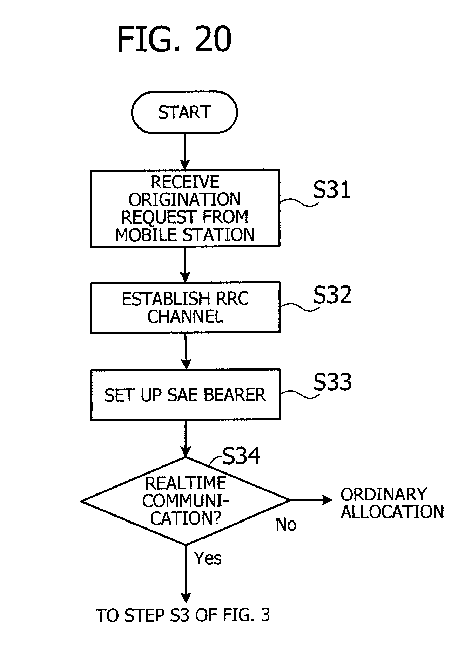

FIG. 20 is a flowchart illustrating how the base station handles an outgoing call.
(Step S31) The base station receives an origination request from a mobile station.
(Step S32) The base station establishes a radio resource control (RRC) channel. That is, the base station establishes a channel that carries control information. During the course of this operation, the requesting mobile station sends a piece of information to, for example, an aGW via the base station to indicate its request for voice communication. Or, alternatively, the mobile station may send it to, for example, a CN device via the base station and RNC.

(Step S33) The base station then sets up a system architecture evolution (SAE) bearer. That is, the base station establishes a channel that carries user data traffic. During the course of this operation, the aGW provides information indicating realtime communication of the mobile station. Or, alternatively, the CN device provides the same via RNC.

More specifically, the base station negotiates with the aGW and receives information about quality-of-service (QoS) when it is finally agreed. Or, alternatively, the base station negotiates with the CN device and receives agreed-upon QoS information via RNC.

The QoS information includes a part that indicates that voice data (realtime communication) will be exchanged as user data. The base station identifies realtime communication from this QoS information.

(Step S34) Based on the information received from a network node, the base station determines whether the mobile station is requesting realtime communication. More specifically, the base station makes this determination based on the above-noted QoS information (e.g., according to whether the QoS information indicates voice data). If it is realtime communication, the base station proceeds to step S3 of FIG. 3 and follows subsequent steps described in FIG. 3. If it is not realtime communication, the base station performs an ordinary allocation process.

As can be seen from the above, the base station identifies a mobile station requesting realtime communication on the basis of information received from a network node during the course of establishing a user data channel.

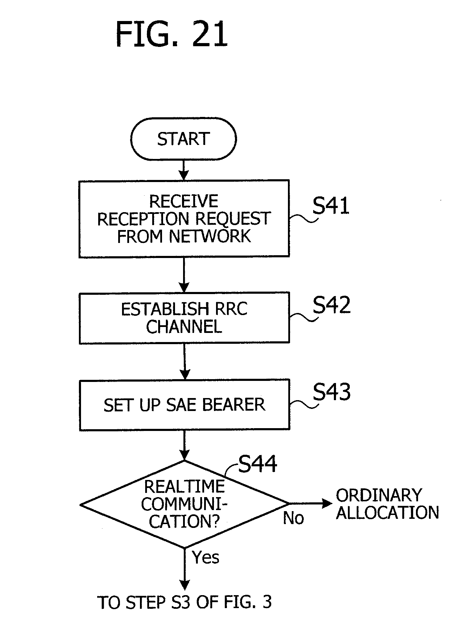

FIG. 21 is a flowchart illustrating how the base station handles an incoming call. In response to a reception request from the network (or calling mobile station), the base station executes the following steps to determine whether the receiving mobile station is about to perform realtime communication.

(Step S41) The base station receives a reception request from the network.
(Step S42) The base station establishes an RRC channel in the same way as step S32 of FIG. 20.

(Step S43) The base station sets up an SAE bearer in the same way as step S33 of FIG. 20. During the course of this operation, QoS information for user data is provided from a network node, which permits the base station to identify realtime communication.

(Step S44) Based on the information received from the network node, the base station determines whether the mobile station is to perform realtime communication, in the same way as steps S34 of FIG. 20. If it is realtime communication, the base station proceeds to step S3 of FIG. 3 and follows subsequent steps described in FIG. 3. If it is not realtime communication, the base station performs an ordinary allocation process.

As can be seen from the above, the base station identifies a mobile station requesting realtime communication on the basis of information supplied from a network node during the course of establishing a user data channel.

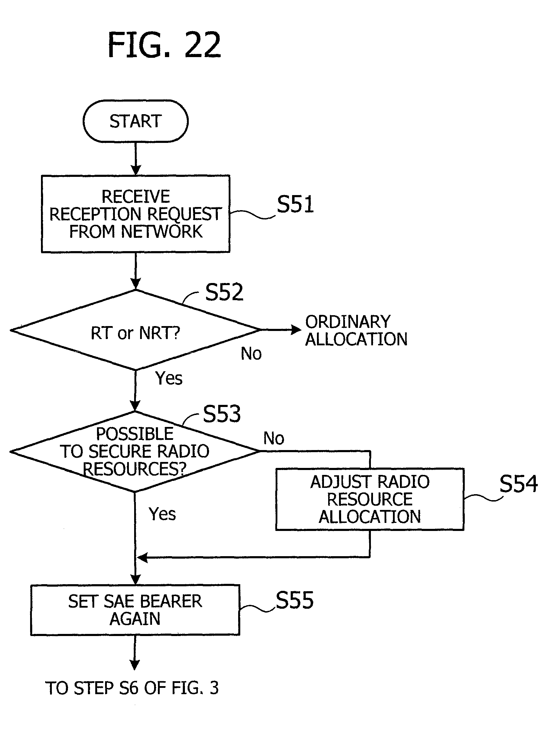

FIG. 22 is a flowchart illustrating how the base station handles a second call setup. The base station may receive a second call setup request, as in the case of an incoming call arriving at a mobile station that is engaged in Internet access. In this case, the base station executes the following steps to determine whether the receiving mobile station is about to perform realtime communication.

(Step S51) The base station receives a reception request from the network.
(Step S52) Based on information provided by a network node, the base station determines whether the request is for realtime communication or non-realtime communication (RT or NRT), in the same way as step S33 of FIG. 20. If the mobile station is about to perform realtime communication, the base station advances to step S53. If it is not realtime communication, the base station performs an ordinary allocation process.

(Step S53) In the same way as step S3 of FIG. 3, the base station determines whether it is possible to secure radio resources periodically for the mobile station. If it is possible to secure radio resources, the base station advances to step S55. It not, the base station proceeds to step S54.

(Step S54) Since it is unable to secure radio resources, the base station then adjusts radio resources of mobile stations performing non-realtime communication. The base station then secures radio resources for the receiving mobile station engaged in Internet access.

(Step S55) The base station secures radio resources and sets up an SAE bearer again. That is, the base station reestablishes a channel that carries user data traffic for the mobile station. The base station then proceeds to step S6 of FIG. 3 and follows subsequent steps described in FIG. 3.

As can be seen from the above, the base station identifies a mobile station requesting realtime communication on the basis of information received from a network node in the case of a second call setup request.
The base station can obtain radio resources for downlink, separately from those for uplink.

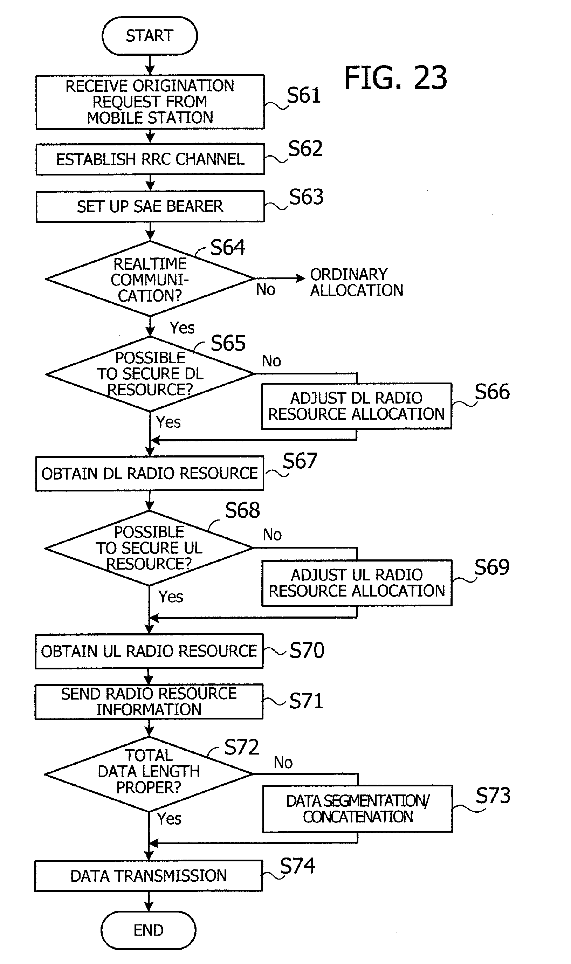

FIG. 23 is a flowchart illustrating how the base station obtains radio resources for downlink and uplink.
(Steps S61 to S64) These steps are similar to steps S31 to S34 of FIG. 20. The description will not be repeated here.

(Step S65) The base station determines whether it is possible to secure downlink radio resources periodically for the mobile station. If it is possible, then the base station advances to step S67. If it is not possible, the base station proceeds to step S66.

(Step S66) Since it has failed to secure downlink radio resources, the base station adjusts radio resources of mobile stations performing non-realtime communication, so that the mobile station requesting realtime communication can secure radio resources.

(Step S67) The base station obtains downlink radio resources and allocates them to the requesting mobile station.
(Step S68) The base station determines whether it is possible to secure uplink radio resources periodically for the mobile station. If it is possible, then the base station advances to step S70. If it is not possible, the base station proceeds to step S69.

(Step S69) Since it has failed to secure uplink radio resources, the base station adjusts radio resources of mobile stations performing non-realtime communication, so that the mobile station requesting realtime communication can secure radio resources.

(Step S70) The base station obtains uplink radio resources and allocates them to the requesting mobile station.
(Steps S71 to S74) These steps are similar to steps S6 to S9 discussed in FIG. 3. The description will not be repeated here.

Note that, at step S71, the base station informs the mobile station of both the uplink radio resources and downlink radio resources.
To inform the mobile station of uplink radio resource, the base station follows the procedure described below. The base station allocates an uplink grant resource to the mobile station for each individual call. Then using Layer 1 (L1)/L2 messages or RRC messages (layer-3 messages), the base station provides the terminal with grant resource information periodically. This grant resource information includes information about the uplink resource that has been allocated to the mobile station.

From the received grant resource information, the mobile station knows the location (e.g., frequency), size, and valid period of usable radio resources.
When terminating a call, the base station sends L1/L2 messages or RRC messages to notify the mobile station of deallocation of the grant resources.

To inform the mobile station of downlink radio resource, the base station follows the procedure described below. For each individual call, the base station periodically assigns the location and size of downlink radio resources with a fixed valid period. Then using L1/L2 messages or RRC messages, the base station informs the terminal of allocated resources periodically.

The mobile station waits for data coming at the location indicated by the received information.
When terminating a call, the base station sends L1/L2 messages or RRC messages to notify the mobile station of deallocation of the radio resources.

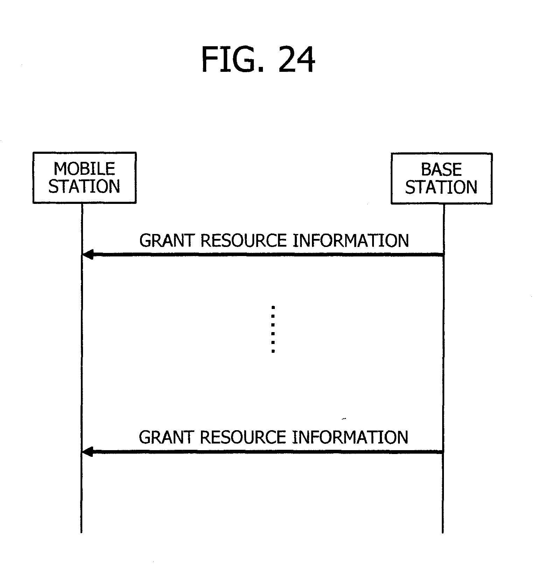

FIG. 24 illustrates notification of radio resources. As noted above, the base station informs the mobile station of obtained radio resources by including that information in grant resource information. The base station 12 may be configured to send this information periodically or on an event-triggered basis (i.e., each time a resource is allocated).

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

1: radio communication device
1a: communication decision means
1b: radio resource securing means
2a to 2c: mobile station
3: upper-level device

## Claims

1. A radio communication device that wirelessly communicates with mobile stations using shared radio resources, the radio communication device comprising:
communication decision means for determining whether information indicating a request for realtime communication is contained in a communication request received from a mobile station and/or communication setup data received from an upper-level device; and
radio resource securing means for securing radio resources continuously or periodically for the requesting mobile station if the received communication request and/or communication setup data contains information indicating a request for realtime communication.

2. The radio communication device according to claim 1, further comprising data segmentation and concatenation means for dividing and/or concatenating data based on a data length of the data before the data is mapped to the radio resources.

3. The radio communication device according to claim 2, wherein the data segmentation and concatenation means divides a header of the data into segments if the data length is greater than a predetermined length.

4. The radio communication device according to claim 3, wherein the data segmentation and concatenation means attaches one of the segments to other data having a compressed header.

5. The radio communication device according to claim 2, wherein the data segmentation and concatenation means concatenates other data or data of another mobile station with a free resource selected from among the radio resources if the data length is smaller than a predetermined length.

6. The radio communication device according to claim 1, wherein the radio resource securing means allocates radio resources of mobile stations engaged in non-realtime communication to the mobile station requesting realtime communication, if no free radio resources are available.

7. The radio communication device according to claim 1, further comprising:
timer means for assigning a timer to data to be transmitted the mobile station; and
data discarding means for discarding the data based on the timer assigned to the data.

8. The radio communication device according to claim 1, further comprising:
a buffer to store data temporarily before the data is transmitted to the mobile station; and
data discarding means for discarding the data in the buffer on an oldest-first basis if the amount of data stored in the buffer exceeds a threshold.

9. The radio communication device according to claim 1, wherein the radio resource securing means secures downlink radio resources and uplink radio resources continuously or periodically.

10. A method for wirelessly communicating with mobile stations using shared radio resources, the method comprising:
determining whether information indicating a request for realtime communication is contained in a communication request received from a mobile station and/or communication setup data received from an upper-level device; and
securing radio resources continuously or periodically for the requesting mobile station if the received communication request and/or communication setup data contains information indicating a request for realtime communication.
